# EUROPÄISCHE PATENTSCHRIFT

(11) **EP 3 224 100 B1**
(45) Veröffentlichungstag und Bekanntmachung des Hinweises auf die Patenterteilung: **26.05.2021**
(21) Anmeldenummer: 15787169.0
(22) Anmeldetag: 22.10.2015
(51) Int. Cl.: B60W 30/165, G05D 1/02, G08G 1/14, G08G 1/00, G08G 1/04, B62D 15/02

(54) **VERFAHREN UND VORRICHTUNG ZUM BETREIBEN VON MEHREREN FAHRZEUGEN**
METHOD AND DEVICE FOR OPERATING A PLURALITY OF VEHICLES
PROCÉDÉ ET DISPOSITIF PERMETTANT DE FAIRE FONCTIONNER PLUSIEURS VÉHICULES

(30) Priorität: 26.11.2014 DE 102014224099
(43) Veröffentlichungstag der Anmeldung: 04.10.2017
(73) Patentinhaber: Robert Bosch GmbH, 70442 Stuttgart (DE)
(72) Erfinder: NORDBRUCH, Stefan, 70806 Kornwestheim (DE)
(86) Internationale Anmeldenummer: PCT/EP2015/074481
(87) Internationale Veröffentlichungsnummer: WO 2016/083034

(56) Entgegenhaltungen:
- DE-A1-102006 026 653
- DE-A1-102010 013 647
- DE-A1-102012 222 562
- JP-A- 2007 233 771
- US-A1- 2005 207 876
- US-B2- 7 119 715
- FERREIRA MICHEL ET AL: "Self-automated parking lots for autonomous vehicles based on vehicular ad hoc networking", 2014 IEEE INTELLIGENT VEHICLES SYMPOSIUM PROCEEDINGS, IEEE, 8. Juni 2014 (2014-06-08), Seiten 472-479, XP032620343, DOI: 10.1109/IVS.2014.6856561 [gefunden am 2014-07-15]

## Beschreibung

Die Erfindung betrifft ein Verfahren und eine Vorrichtung zum Betreiben von mehreren Fahrzeugen. Die Erfindung betrifft ferner ein Computerprogramm.

### Stand der Technik

Die Offenlegungsschrift DE 10 2006 026 653 A1 zeigt eine Vorrichtung und ein Verfahren zum Steuern eines Fahrzeugs.

Die Offenlegungsschrift DE 10 2012 222 562 A1 zeigt ein System für bewirtschaftete Parkflächen zur Überführung eines Fahrzeugs von einer Startposition in eine Zielposition.

Die Offenlegungsschrift JP 002007233771 A offenbart einen Parkroboter als Lotse, der ein Fahrzeug zu einem Parkplatz hinlotst. Das Fahrzeug folgt dem Parkrobert selbständig.

Bei einem vollautomatisierten (autonomen) sogenannten Valet Parking wird ein Fahrzeug von seinem Fahrer auf einer Abgabestelle, zum Beispiel vor einem Parkhaus geparkt und von da fährt das Fahrzeug selber in eine Parkposition / Parkbucht und wieder zurück zur Abgabestelle.

### Offenbarung der Erfindung

Die der Erfindung zugrunde liegende Aufgabe kann darin gesehen werden, ein effizientes Konzept bereitzustellen, mittels welchen ein Fahrzeug auf einem Parkplatz autonom zu einer Zielposition fahren kann.

Diese Aufgabe wird mittels des jeweiligen Gegenstands der unabhängigen Ansprüche gelöst. Vorteilhafte Ausgestaltungen der Erfindung sind Gegenstand von jeweils abhängigen Unteransprüchen. Die Erfindung wird durch die Ansprüche definiert.

Nach einem Aspekt wird ein Parksystem für Fahrzeuge bereitgestellt, umfassend einen Parkplatz und die Vorrichtung zum Betreiben von mehreren Fahrzeugen.

Nach noch einem Aspekt wird ein Computerprogrammprodukt bereitgestellt, welches Programmcode zur Durchführung des Verfahrens zum Betreiben von mehreren Fahrzeugen umfasst, wenn das Computerprogramm auf einem Computer ausgeführt wird.

Die Erfindung umfasst also insbesondere und unter anderem den Gedanken, dass ein Fahrzeug als Führungsfahrzeug autonom auf dem Parkplatz fährt oder navigiert, wobei ein anderes Fahrzeug diesem Führungsfahrzeug autonom folgt. Dadurch wird beispielsweise der technische Vorteil bewirkt, dass das folgende Fahrzeug, also das zweite Fahrzeug, beispielsweise kein Wissen über den Parkplatz, zum Beispiel eine Infrastruktur des Parkplatzes oder eine Topografie des Parkplatzes, aufweisen muss. Es reicht, dass das zweite Fahrzeug dem ersten Fahrzeug als Führungsfahrzeug folgt, damit das zweite Fahrzeug zu seiner Zielposition autonom fahren kann. Hier reicht es insbesondere, dass das für eine autonome Fahrt oder Navigation auf dem Parkplatz notwendige Wissen bei dem ersten Fahrzeug, also dem Führungsfahrzeug, vorhanden ist. Da in der Regel eine autonome Fahrt oder Navigation auf einem Parkplatz technisch aufwändig ist, reicht es, dass das zweite Fahrzeug hinsichtlich einer autonomen Fahrt oder einer autonomen Fahrfunktionalität technisch einfacher aufgebaut sein kann als das erste Fahrzeug. Denn das zweite Fahrzeug muss sich lediglich an dem ersten Fahrzeug orientieren und diesem folgen. Hierfür muss beispielsweise eine Umfeldsensorik nicht so einen großen Funktionsumfang aufweisen relativ zu dem ersten Fahrzeug, das ohne eine solche Führung durch ein Fahrzeug autonom auf dem Parkplatz fährt oder navigiert. Auch kann eine Verarbeitungseinrichtung zum Verarbeiten von Sensordaten von einer Umfeldsensorik entsprechend weniger aufwändig und komplex konstruiert sein.

Das heißt, dass das zweite Fahrzeug hinsichtlich einer autonomen Fahrfunktionalität nicht unbedingt den gleichen Funktionsumfang aufweisen muss wie das erste Fahrzeug. Es ist somit in vorteilhafter Weise insbesondere ermöglicht, dass auch Fahrzeuge, welche keinen entsprechend großen Funktionsumfang hinsichtlich einer autonomen Fahrfunktionalität aufweisen, dennoch autonom zu einer Zielposition auf einem Parkplatz gelangen können. Dies erfindungsgemäß dadurch, dass sie dem Führungsfahrzeug folgen. Dieses lotst das Fahrzeug zu seiner Zielposition.

Ein Parkplatz im Sinne der vorliegenden Erfindung kann auch als eine Parkfläche bezeichnet werden und dient als Abstellfläche für Fahrzeuge. Der Parkplatz bildet somit insbesondere eine zusammenhängende Fläche, die mehrere Stellplätze (bei einem Parkplatz auf privatem Grund) oder Parkstände (bei einem Parkplatz auf öffentlichem Grund) aufweist. Der Parkplatz kann nach einer Ausführungsform von einem Parkhaus umfasst sein. Insbesondere ist der Parkplatz von einer Garage umfasst.

Autonom im Sinne der vorliegenden Erfindung bedeutet insbesondere, dass das Fahrzeug (also das erste und das zweite Fahrzeug) selbstständig, also ohne einen Eingriff eines Fahrers, auf dem Parkplatz navigiert oder fährt. Das Fahrzeug fährt also selbstständig auf dem Parkplatz, ohne dass ein Fahrer hierfür das Fahrzeug steuern oder sich im Fahrzeug befinden müsste. Ein Führen umfasst insbesondere eine Quer- und/oder eine Längsführung des Fahrzeugs. Ein solch autonom fahrendes Fahrzeug, das automatisch ein- und ausparken kann, wird beispielsweise als ein AVP-Fahrzeug bezeichnet. AVP steht für "automatic valet parking" und kann mit "automatischer Parkvorgang" übersetzt werden. Fahrzeuge, die diese AVP-Funktionalität nicht aufweisen, werden beispielsweise als normale Fahrzeuge bezeichnet.

Nach einer Ausführungsform ist vorgesehen, dass die Navigationsdaten die Zielposition und einen Befehl umfassen, dass das Führungsfahrzeug während seiner autonomen Navigation an der Zielposition vorbeifahren soll. Dadurch wird insbesondere der technische Vorteil bewirkt, dass das Führungsfahrzeug zu der Zielposition fahren wird, sodass dann das zweite Fahrzeug ebenfalls zu der Zielposition gelangen wird. Es wird also dem ersten Fahrzeug vorgegeben, zu welcher Zielposition auf dem Parkplatz es fahren soll.

Nach einer Ausführungsform ist vorgesehen, dass die Navigationsdaten eine abzufahrende Solltrajektorie umfassend die Zielposition umfassen. Das heißt also, dass dem ersten Fahrzeug eine abzufahrende Solltrajektorie vorgegeben wird, welche die Zielposition umfasst. Dadurch wird insbesondere der technische Vorteil bewirkt, dass durch das Abfahren dieser Solltrajektorie das erste Fahrzeug an der Zielposition vorbeifahren wird oder zu der Zielposition fahren wird. Das erste Fahrzeug muss somit nicht mehr unbedingt selbst eine Trajektorie ermitteln, die zu der Zielposition führt. Ebenfalls kann durch das Vorgeben einer solchen abzufahrenden Solltrajektorie eine optimierte Trajektorie für das erste Fahrzeug vorgegeben werden. Nämlich dahingehend optimiert, dass beispielsweise ein Verkehrsfluss auf dem Parkplatz optimiert werden kann. Denn in der Regel weist beispielsweise ein Betreiber des Parkplatzes mehr Wissen hinsichtlich eines Verkehrsflusses auf dem Parkplatz auf als die Fahrzeuge selbst, die auf dem Parkplatz fahren. Entsprechend kann der Betreiber des Parkplatzes durch das Vorgeben einer bestimmten Solltrajektorie für das Führungsfahrzeug den Verkehrsfluss optimieren.

In einer weiteren Ausführungsform ist vorgesehen, dass eine Fahrt von zumindest einem der beiden Fahrzeuge (vorzugsweise beiden) zumindest teilweise (vorzugsweise vollständig) mittels eines fahrzeugexternen Überwachungssystems überwacht wird. Dadurch wird insbesondere der technische Vorteil bewirkt, dass Probleme, die während der Fahrt auftreten können, erkannt werden können. Somit kann in vorteilhafter Weise effizient auf ein auftretendes Problem reagiert werden. Dies insbesondere durch adäquate Maßnahmen. Diese Maßnahmen hängen insbesondere von dem konkret auftretenden Problem ab.

Das Überwachungssystem umfasst nach einer Ausführungsform eine oder mehrere Videokameras und/oder einen mehrere Radarsensoren und/oder einen oder mehrere Ultraschallsensoren und/oder einen oder mehrere Lidarsensoren und/oder einen oder mehrere Lasersensoren und/oder eine oder mehrere Lichtschranken und/oder einen oder mehrere Türöffnungssensoren.

Nach noch einer Ausführungsform ist vorgesehen, dass mittels des Überwachungssystems überwacht wird, ob das zweite Fahrzeug dem Führungsfahrzeug fehlerfrei folgt. Dadurch wird insbesondere der technische Vorteil bewirkt, dass in dem Fall, in welchem das zweite Fahrzeug dem Führungsfahrzeug nicht mehr fehlerfrei folgt, eingegriffen und entsprechende Maßnahmen ergriffen werden können. So ist beispielsweise nach einer Ausführungsform vorgesehen, dass entweder an das erste oder das zweite oder an beide Fahrzeuge ein Stoppsignal gesendet wird. Ansprechend auf das Stoppsignal stoppen die Fahrzeuge, sodass dadurch in vorteilhafter Weise ein Kollisionsrisiko verringert ist. Wenn das Stoppsignal an das Führungsfahrzeug gesendet wird, so stoppt dieses, wobei das zweite Fahrzeug dann ebenfalls stoppen wird, insofern es sich an dem Führungsfahrzeug orientiert. Denn das zweite Fahrzeug weist insbesondere zumindest eine dahingehende Fahrfunktionalität auf, dass es automatisch stoppt, bevor es auf ein Hindernis, hier das Führungsfahrzeug, auffährt.

In einer weiteren Ausführungsform ist vorgesehen, dass mittels des Überwachungssystems überwacht wird, ob andere Objekte auf dem Parkplatz die Fahrt stören. Dadurch wird insbesondere der technische Vorteil bewirkt, dass effizient erkannt werden kann, ob andere Objekte die Fahrt der Fahrzeuge stören können. Andere Objekte sind beispielsweise andere Fahrzeuge und/oder Personen, die insbesondere ungeplant, die Fahrt stören. Eine beispielhafte Maßnahme kann nach einer Ausführungsform sein, dass analog zu den vorstehend gemachten Ausführungen ein Stoppsignal an das oder die Fahrzeuge (also das erste, das zweite und/oder die anderen Fahrzeuge) gesendet wird. Ansprechend auf das Stoppsignal stoppen diese Fahrzeuge. Somit kann in vorteilhafter Weise ein Kollisionsrisiko verringert werden. Sofern beispielsweise Personen die Fahrt stören, ist nach einer Ausführungsform beispielhaft vorgesehen, dass eine Warnansage oder ein Warnsignal ausgegeben wird, welches signalisieren soll, dass sich autonom fahrende Fahrzeuge im Umfeld der Personen befinden. Die Personen können so in vorteilhafter Weise gewarnt werden und entsprechend ihr Verhalten anpassen, sodass beispielsweise in vorteilhafter Weise ein Kollisionsrisiko verringert werden kann.

Gemäß einer weiteren Ausführungsform ist vorgesehen, dass mittels des Überwachungssystems überwacht wird, ob das Führungsfahrzeug zu der Zielposition fährt. Dadurch wird insbesondere der technische Vorteil bewirkt, dass effizient erkannt werden kann, wenn das Führungsfahrzeug nicht zu der Zielposition fährt. In einem solchen Fall würde dann auch das zweite Fahrzeug nicht zu seiner Zielposition gelangen. Somit können entsprechende Gegenmaßnahmen ergriffen werden. Analog kann auch hier ein Stoppsignal an die Fahrzeuge gesendet werden. Insbesondere ist nach einer beispielhaften Ausführungsform vorgesehen, dass dem Führungsfahrzeug eine Korrektursolltrajektorie übermittelt wird, basierend auf welcher das Führungsfahrzeug zu der Zielposition gelangen kann. Das Führungsfahrzeug kann also mittels Abfahren dieser Ausgleichs- oder Korrekturtrajektorie trotz seiner zuvor fehlerhaften Fahrt dennoch zu der Zielposition gelangen und somit auch das zweite Fahrzeug zu seiner Zielposition lotsen oder führen.

In einer anderen Ausführungsform ist vorgesehen, dass dem zweiten Fahrzeug zum Abstellen in die Zielposition eine Soll-Abstelltrajektorie über das Kommunikationsnetzwerk übermittelt wird, so dass sich das zweite Fahrzeug basierend auf der Soll-Abstelltrajektorie in die Zielposition abstellen kann. Dadurch wird insbesondere der technische Vorteil bewirkt, dass das zweite Fahrzeug beispielsweise kein Wissen über eine genaue Infrastruktur oder Abmessungen der Parkposition aufweisen muss. Insbesondere kann so in vorteilhafter Weise ein Einparken des zweiten Fahrzeugs effizient bewirkt werden. Somit muss beispielsweise das zweite Fahrzeug nicht notwendigerweise einen technisch aufwändigen Parkassistenten mit einem hohen Funktionsumfang aufweisen. Denn wie genau das zweite Fahrzeug in die Zielposition gelangen soll, um sich dort abzustellen und dort letztlich zu parken, wird dem zweiten Fahrzeug vorgegeben. Das zweite Fahrzeug muss sich selbst somit nicht mehr die entsprechende Soll-Abstelltrajektorie ermitteln.

In einer anderen Ausführungsform ist vorgesehen, dass die Zielposition eine Parkposition ist, an welcher das zweite Fahrzeug parken soll, oder eine Abholposition ist, an welcher ein Fahrer des Fahrzeugs das zweite Fahrzeug abholen soll. Dadurch wird insbesondere der technische Vorteil bewirkt, dass das zweite Fahrzeug effizient zu seiner Parkposition gelangen kann. Somit kann in vorteilhafter Weise ein automatischer Parkvorgang, ein sogenannter Automatic Valet Parking, durchgeführt werden. Insbesondere kann somit das zweite Fahrzeug von seiner Parkposition zu seiner Abholposition gelangen. Dies insbesondere in effizienter Art und Weise.

Die Abholposition ist zum Beispiel eine Abgabeposition, an welcher ein Fahrer eines Fahrzeugs sein Fahrzeug für einen autonomen Parkvorgang abstellen kann und von dieser sein Fahrzeug zu einem späteren Zeitpunkt wieder abholen kann.

Eine Parkposition im Sinne der vorliegenden Erfindung ist eine Position, an welcher ein Fahrzeug autonom parken soll.

Nach einer weiteren Ausführungsform ist vorgesehen, dass als Zielpositionen die Parkposition und die Abholposition vorgesehen werden, so dass das zweite Fahrzeug dem Führungsfahrzeug zu der Parkposition folgt und dort einparkt, wobei zu einer späteren Zeit das geparkte Fahrzeug aus der Parkposition ausparkt und dem Führungsfahrzeug oder einem weiteren Führungsfahrzeug zu der Abholposition folgt und sich dort abstellt.

Dadurch wird insbesondere der technische Vorteil bewirkt, dass das zweite Fahrzeug autonom zu der Parkposition fahren kann, dort einparken kann und dort wieder ausparken kann, dies insbesondere nach einem Ablauf einer vorbestimmten Parkzeitdauer, und zu der Abholposition autonom fahren kann. Hierbei ist insbesondere vorgesehen, dass die autonome Fahrt des zweiten Fahrzeugs von der Parkposition zu der Abholposition analog zu der autonomen Fahrt des zweiten Fahrzeugs zu der Parkposition ist. Für diese autonome Fahrt, also von der Fahrt von der Parkposition zu der Abholposition, ist nach einer Ausführungsform das gleiche Führungsfahrzeug vorgesehen, das das zweite Fahrzeug bereits zu der Parkposition geführt hat. Nach einer anderen Ausführungsform ist vorgesehen, dass hierfür ein weiteres Führungsfahrzeug vorgesehen ist, welches analog zu dem Führungsfahrzeug das zweite Fahrzeug von der Parkposition zu der Abholposition führt oder lotst. Entsprechend werden auch hier diesem weiteren Führungsfahrzeug Navigationsdaten übermittelt. Das weitere Führungsfahrzeug fährt autonom auf dem Parkplatz basierend auf diesen Navigationsdaten. Die entsprechend im Zusammenhang mit dem Führungsfahrzeug gemachten Ausführungen gelten analog für das weitere Führungsfahrzeug.

Nach einer Ausführungsform ist vorgesehen, dass das zweite Fahrzeug von seinem Führungsfahrzeug, also dem ersten Fahrzeug, von der Abgabeposition abgeholt wird, sodass die autonome Fahrt des zweiten Fahrzeugs mittels eines Folgens des Führungsfahrzeugs von der Abgabeposition zu der Parkposition führt.

Funktionalitäten hinsichtlich des Verfahrens ergeben sich analog aus entsprechenden Funktionalitäten der Vorrichtung und umgekehrt. Das heißt, dass sich Verfahrensmerkmale analog aus entsprechenden Vorrichtungsmerkmalen und umgekehrt ergeben. Entsprechend gemachte Ausführungen sowie genannte technische Vorteile gelten analog sowohl für das Verfahren als auch für die Vorrichtung.

Nach einer Ausführungsform ist vorgesehen, dass die Fahrzeuge jeweils eine Umfeldsensorik aufweisen.

Eine Umfeldsensorik im Sinne der vorliegenden Erfindung umfasst insbesondere einen oder mehrere der folgenden Umfeldsensoren: Radarsensor, Lidarsensor, Ultraschallsensor, Lasersensor und Videosensor. Mittels einer solchen Umfeldsensorik ist in vorteilhafter Weise eine sensorische Erfassung eines Fahrzeugumfelds ermöglicht.

Nach einer Ausführungsform umfasst das Kommunikationsnetzwerk ein WLAN-Netzwerk und/oder ein Mobilfunknetzwerk.

In einer Ausführungsform wird respektive ist eine Kommunikation über das Kommunikationsnetzwerk verschlüsselt.

Nach einer Ausführungsform umfasst die Vorrichtung ein fahrzeugexternes Überwachungssystem zum Überwachen von zumindest Teilen, insbesondere der gesamten, Fahrt von zumindest einem der beiden Fahrzeuge, insbesondere beiden Fahrzeugen.

Das Folgen kann dabei mit üblichen bekannten Fahrerassistenzsystemen, zum Beispiel einem ACC (Automatic Cruise Control, Adaptive Geschwindigkeitsregelung) durchgeführt werden.

Das zweite Fahrzeug weist nach einer Ausführungsform zumindest eines der folgenden Fahrerassistenzsysteme auf: ACC, Objekterkennungsassistenten, Spurerkennungsassistenten. Mittels dieser Fahrerassistenzsysteme ist ein Folgen besonders einfach möglich.

Nach einer Ausführungsform umfasst das Zuweisen ein sensorisches Erfassen des Führungsfahrzeugs mittels des zweiten Fahrzeugs, dies insbesondere mittels einer Umfeldsensorik, an einer vorbestimmten Position. Zum Beispiel kann das Führungsfahrzeug vor dem zweiten Fahrzeug an einer Abgabeposition stehen. Das heißt, wenn das zweite Fahrzeug an der Abgabeposition steht und ein Fahrzeug sensorisch erfasst, welches vor dem zweiten Fahrzeug steht, so weiß das zweite Fahrzeug, dass es dem ersten Fahrzeug folgen soll.

Umgekehrt kann ein Zuweisen umfassen, dass das erste Fahrzeug ein Fahrzeug sensorisch erfasst, dies insbesondere mittels einer Umfeldsensorik, welches hinter dem ersten Fahrzeug an einer Abgabeposition steht. In einem solchen Fall weiß dann das erste Fahrzeug, dass es als Führungsfahrzeug das zweite Fahrzeug führen soll.

Ein Zuweisen kann nach einer Ausführungsform eine C2C-Kommunikation umfassen. C2C-Kommunikation steht für Car-to-Car-Kommunikation und bezeichnet eine Kommunikation von Fahrzeugen untereinander. Das heißt, dass die Fahrzeuge untereinander kommunizieren, um klarzustellen, welches Fahrzeug wem folgen soll.

Alternativ oder zusätzlich kann nach einer weiteren Ausführungsform vorgesehen sein, dass eine C2X-Kommunikation durchgeführt wird, um die Zuweisung durchzuführen. C2X-Kommunikation steht für Car-to-Infrastructure-Kommunikation und bezeichnet eine Kommunikation zwischen einer festen Infrastruktur und einem Fahrzeug. Das heißt, dass analog zur C2C-Kommunikation die Infrastruktur, zum Beispiel ein Parkplatzverwaltungsserver, insbesondere die Vorrichtung zum Betreiben von mehreren Fahrzeugen, das Zuweisen durchführt.

Das heißt, dass die Infrastruktur beispielsweise dem zweiten Fahrzeug mitteilt, dass es dem ersten Fahrzeug folgen soll. Die Infrastruktur teilt zum Beispiel dem ersten Fahrzeug mit, dass es das zweite Fahrzeug lotsen oder führen soll.

Zum Beispiel ist vorgesehen, dass zumindest eines der Fahrzeuge, insbesondere beide Fahrzeuge, dies jeweils bestätigen.

Grundsätzlich ist es aber nicht notwendig, dass das Führungsfahrzeug weiß, dass es ein Führungsfahrzeug ist, also eine Führungsaufgabe hat. Das erste Fahrzeug muss in der Regel zum Beispiel nur warten, bis das zweite Fahrzeug und insbesondere die Infrastruktur bereit sind und die Infrastruktur zum Beispiel ein Startsignal zum Starten der Fahrt gibt, ein Go-Signal sozusagen.

Das erste Fahrzeug wird nach einer Ausführungsform mittels der Infrastruktur an der Zielposition des zweiten Fahrzeugs gestoppt.

In einer Ausführungsform ist vorgesehen, dass mehrere zweite Fahrzeuge vorgesehen sind, also mehrere Folgefahrzeuge, also mehrere Fahrzeuge, die dem ersten Fahrzeug folgen. Hierbei ist vorzugsweise vorgesehen, dass die mehreren Fahrzeuge in Kolonne hinter dem ersten Fahrzeug hinterherfahren. Die Ausführungen für ein Folgefahrzeug gelten analog für mehrere Fahrzeuge.

Jedes Fahrzeug hat eine eigene Zielposition zugeordnet. Die Infrastruktur, zum Beispiel ein Parkplatzverwaltungsserver, insbesondere die Vorrichtung zum Betreiben von mehreren Fahrzeugen, überwacht die Fahrt der Fahrzeuge und teilt beispielsweise einem der Folgefahrzeuge bei der Erreichung seiner Zielposition mit, dass es hier halten und/oder parken soll. Also eine C2X-Kommunikation.

Alternativ oder zusätzlich kann ein entsprechendes Halt- oder Stoppsignal von dem Führungsfahrzeug an das Folgefahrzeug, welches halten und/oder parken soll, kommuniziert werden. Also eine C2C-Kommunikation.

Nach einer Ausführungsform sind in der Kolonne die zweiten Fahrzeuge so von Anfang an sortiert, weisen also eine vorbestimmte Reihenfolge auf, dass das letzte Folgefahrzeug die erste Parkposition zugewiesen bekommen hat, damit die anderen weiterfahren können. Das heißt, dass die Reihenfolge der zweiten Fahrzeuge und die entsprechenden Zielpositionen so aufeinander abgestimmt werden respektive sind, dass stets das letzte Folgefahrzeug in der Kolonne an der nächsten Zielposition halten und/oder parken soll.

Gemäß einer weiteren Ausführungsform ist vorgesehen, dass über das Kommunikationsnetzwerk an das erste und/oder an das zweite Fahrzeug ein Zuweisungssignal gesendet wird, dass das erste Fahrzeug das Führungsfahrzeug und/oder das zweite Fahrzeug das folgende Fahrzeug sind.

Die Erfindung wird im Folgenden anhand von bevorzugten Ausführungsbeispielen näher erläutert. Hierbei zeigen
Fig. 1 ein Ablaufdiagramm eines Verfahrens zum Betreiben von mehreren Fahrzeugen,
Fig. 2 eine Vorrichtung zum Betreiben von mehreren Fahrzeugen und
Fig. 3 ein Parksystem für Fahrzeuge.

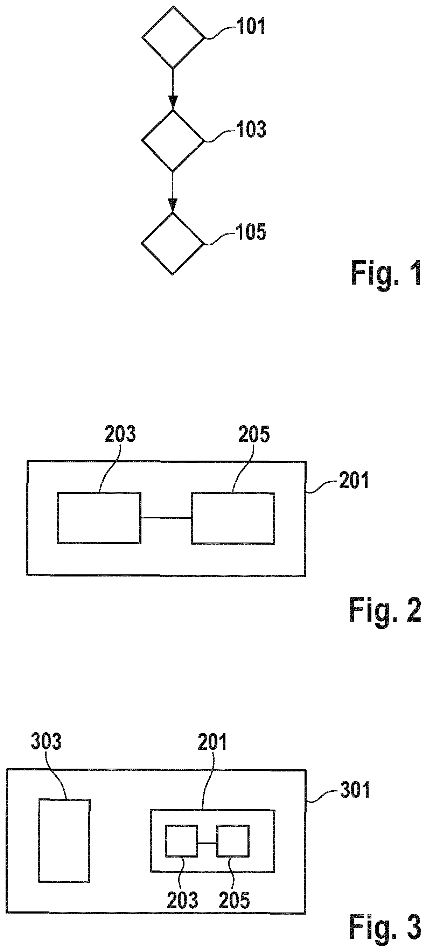

Fig. 1 zeigt ein Ablaufdiagramm eines Verfahrens zum Betreiben von mehreren Fahrzeugen.

In einem Schritt 101 werden Navigationsdaten für eine autonome Fahrt an ein erstes Fahrzeug gesendet. Diese Navigationsdaten umfassen insbesondere Daten, die es dem ersten Fahrzeug ermöglichen, autonom auf dem Parkplatz zu navigieren oder zu fahren. Navigationsdaten umfassen somit nach einer Ausführungsform beispielsweise Kartendaten einer digitalen Karte des Parkplatzes, Positionsdaten von mobilen und/oder stationären Objekten, die sich auf oder innerhalb des Parkplatzes befinden, Daten einer abzufahrenden Solltrajektorie.

In einem Schritt 103 wird einem zweiten Fahrzeug das erste Fahrzeug als ein Führungsfahrzeug zugewiesen. Das heißt, dass das zweite Fahrzeug dem ersten Fahrzeug autonom folgen soll. Das Führungsfahrzeug ist also ein Lotse für das zweite Fahrzeug, das das zweite Fahrzeug führt oder lotst.

Während das zweite Fahrzeug dem Führungsfahrzeug während der autonomen Navigation des Führungsfahrzeugs auf dem Parkplatz autonom folgt, wird gemäß einem Schritt 105 ein Zielsignal an das zweite Fahrzeug über das Kommunikationsnetzwerk gesendet, dass das zweite Fahrzeug das Folgen abbrechen und sich in eine Zielposition abstellen soll.

Ansprechend auf das Zielsignal bricht das zweite Fahrzeug das Folgen ab und stellt sich vorzugsweise in die Zielposition ab.

Das Führungsfahrzeug fährt vorzugsweise weiter.

Somit ist in vorteilhafter Weise bewirkt, dass das zweite Fahrzeug autonom zu seiner Zielposition auf dem Parkplatz gelangen kann. Das zweite Fahrzeug selbst muss insbesondere kein Wissen über den Parkplatz selbst aufweisen. Es reicht, wenn es dem Führungsfahrzeug folgt, sich also an diesem orientiert.

Fig. 2 zeigt eine Vorrichtung 201 zum Betreiben von mehreren Fahrzeugen, umfassend:
- einen Prozessor 203 zum Ermitteln von Navigationsdaten für eine autonome Navigation eines ersten Fahrzeugs auf einem Parkplatz,
- eine Kommunikationsschnittstelle 205 zum Senden der Navigationsdaten über ein Kommunikationsnetzwerk an das erste Fahrzeug für eine autonome Navigation des Führungsfahrzeugs auf dem Parkplatz, so dass das Führungsfahrzeug basierend auf den Navigationsdaten autonom auf dem Parkplatz navigieren kann, wobei
- der Prozessor 203 ferner ausgebildet ist, ein Zuweisungssignal zum Zuweisen des ersten Fahrzeugs an ein zweites Fahrzeug als ein Führungsfahrzeug für das zweite Fahrzeug zu ermitteln, dem dieses autonom folgen soll,
- wobei die Kommunikationsschnittstelle 205 ferner ausgebildet ist, das Zuweisungssignal über das Kommunikationsnetzwerk an das zweite Fahrzeug zu senden, so dass dem zweiten Fahrzeug das erste Fahrzeug als Führungsfahrzeug, dem das erste Fahrzeug mittels seiner Fahrerassistenzsysteme autonom folgen soll, zugewiesen werden kann,
- wobei der Prozessor 203 ferner ausgebildet ist, ein Zielsignal für das dem Führungsfahrzeug autonom folgende zweite Fahrzeug zu ermitteln, welches bewirkt dass das zweite Fahrzeug das Folgen abbricht und sich in eine Zielposition abstellt, wobei
- die Kommunikationsschnittstelle 205 ausgebildet ist, das Zielsignal über das Kommunikationsnetzwerk an das zweite Fahrzeug zu senden.

Fig. 3 zeigt ein Parksystem 301 für Fahrzeuge, wobei das Parksystem 301 einen Parkplatz 303 und die Vorrichtung 201 der Fig. 2 umfasst.

Die Erfindung umfasst also insbesondere den Gedanken, ein technisches und effizientes Konzept bereitzustellen, basierend auf welchem ein vollautomatisches (autonomes) Valet Parking, also ein autonomer Parkvorgang, für AVP-Fahrzeuge der ersten Generation mittels Unterstützung von AVP-Fahrzeugen der zweiten und dritten Generation durchgeführt werden kann. Der erfindungsgemäße Kerngedanke ist insbesondere, dass die AVP-Fahrzeuge der zweiten oder dritten Generation, also Fahrzeuge, die basierend auf Navigationsdaten autonom auf einem Parkplatz navigieren oder fahren können, also nicht ferngesteuert werden müssen, zum Beispiel basierend auf einer hochgenauen Parkraumkarte, als Führungsfahrzeug für Fahrzeuge der ersten Generation, also insbesondere ferngesteuerte Fahrzeuge, also Fahrzeuge, die ferngesteuert werden, verwendet werden.

Das heißt also insbesondere, dass die AVP-Fahrzeuge der ersten Generation nicht mehr zum Beispiel von einem Parkraumverwaltungssystem mittels abzufahrender Trajektorienteile ferngesteuert werden. Vielmehr bekommen diese Fahrzeuge ein Führungsfahrzeug der zweiten oder dritten Generation an AVP-Fahrzeugen zugewiesen. Die Fahrzeuge der ersten Generation folgen somit dem Fahrzeug der zweiten oder dritten Generation.

Das Folgen kann dabei mit üblichen bekannten Fahrerassistenzsystemen, zum Beispiel einem ACC (Automatic Cruise Control, Adaptive Geschwindigkeitsregelung) durchgeführt werden.

Nach einer Ausführungsform wird eine Parkposition für das erste Fahrzeug, also dem Führungsfahrzeug, also insbesondere dem AVP-Fahrzeug der zweiten oder dritten Generation, derart gewählt, dass es beim Weg zur Zielposition, also insbesondere zu der Parkposition, des zweiten Fahrzeugs dieser Zielposition nachgeordnet liegt. Das heißt also, dass zunächst die Zielposition des zweiten Fahrzeugs angefahren wird, um erst anschließend zu der Parkposition des Führungsfahrzeugs zu fahren.

Nach einer Ausführungsform ist vorgesehen, dass zum Zeitpunkt, an welchem das Führungsfahrzeug, also insbesondere das AVP-Fahrzeug der zweiten oder dritten Generation, an der Parkposition des zweiten Fahrzeugs, also insbesondere des Fahrzeugs der ersten Generation, vorbeifährt, das zweite Fahrzeug ein Zielsignal oder ein Stoppsignal erhält. Somit hat in vorteilhafter Weise das zweite Fahrzeug die Information, dass es vor der ihm zugewiesenen Parkposition ist.

Im Weiteren ist dann nach einer Ausführungsform vorgesehen, dass das zweite Fahrzeug an der ihm zugewiesenen Parkposition autonom, also selbstständig, einparkt. Das heißt, dass das zweite Fahrzeug diesen Parkvorgang insbesondere mit im zweiten Fahrzeug vorhandenen Parkfunktionen, also beispielsweise einen Parkassistenten, aus- oder durchführt und/oder die hierfür notwendige Einparktrajektorie von einem Parkhausverwaltungssystem über das Kommunikationsnetzwerk übermittelt bekommt.

Der Ausparkvorgang und der Rückweg zu der Abholposition, die beispielsweise gleich einer Abgabeposition oder Annahmeposition oder Annahmestelle sein kann, werden analog durchgeführt. Das heißt also, dass das zweite Fahrzeug beispielsweise basierend auf seinem Parkassistenten autonom ausparkt und/oder die hierfür notwendige Ausparktrajektorie vom Parkhausverwaltungssystem übermittelt bekommt. Das Führungsfahrzeug oder das weitere Führungsfahrzeug führt oder lotst dann das zweite Fahrzeug zu der Abgabeposition/Annahmeposition oder allgemein Abholposition.

Nach einer Ausführungsform ist vorgesehen, dass der gesamte Vorgang, allgemein auch nur Teile des Vorgangs, überwacht werden. Dies insbesondere mittels eines fahrzeugexternen Überwachungssystems, welches beispielsweise von einem Parkplatzverwaltungssystem umfasst sein kann. Allgemein kann die Vorrichtung von einem solchen Parkplatzverwaltungssystem zum Verwalten oder Betreiben eines Parkplatzes umfasst sein.

Der Vorgang umfasst insbesondere eine jeweilige Fahrt des ersten und des zweiten Fahrzeugs.

Dadurch kann in vorteilhafter Weise bewirkt werden, dass, wenn notwendig, eingegriffen werden kann. Zum Beispiel, wenn das zweite Fahrzeug dem ersten Fahrzeug fehlerhaft folgt und/oder wenn andere Fahrzeuge und/oder Personen (ungeplant) den Vorgang stören und/oder wenn das erste Fahrzeug nicht korrekt den Weg zu der Zielposition fährt.

Erfindungsgemäße Vorteile sind insbesondere darin zu sehen, dass durch das Führen des zweiten Fahrzeugs, also insbesondere einem AVP-Fahrzeug der ersten Generation, durch ein Führungsfahrzeug, also insbesondere einem AVP-Fahrzeug der zweiten oder dritten Generation, das zweite Fahrzeug relativ einfach und ohne erhebliche Zusatzsysteme zur Zielposition geführt werden kann. Insbesondere muss ein Parkplatzverwaltungssystem weniger Aufgaben hinsichtlich eines Führens des zweiten Fahrzeugs zu seiner Zielposition übernehmen.

Nach einer Ausführungsform ist vorgesehen, dass die Vorrichtung zum Betreiben von mehreren Fahrzeugen eingerichtet oder ausgebildet ist, das Verfahren zum Betreiben von mehreren Fahrzeugen durch- oder auszuführen.

## Patentansprüche

1. Verfahren zum Betreiben von mehreren Fahrzeugen,
- wobei an ein erstes Fahrzeug Navigationsdaten für eine autonome Navigation des ersten Fahrzeugs auf einem Parkplatz über ein Kommunikationsnetzwerk gesendet (101) werden,
- wobei einem zweiten Fahrzeug das erste Fahrzeug als ein Führungsfahrzeug zugewiesen (103) wird, dem das zweite Fahrzeug mittels seiner Fahrassistenzsysteme autonom folgen soll, wobei,
- während das zweite Fahrzeug dem Führungsfahrzeug während der autonomen Navigation des Führungsfahrzeugs auf dem Parkplatz autonom folgt, ein Zielsignal an das zweite Fahrzeug über das Kommunikationsnetzwerk gesendet (105) wird, welches bewirkt dass das zweite Fahrzeug das Folgen abbricht und sich in eine Zielposition abstellt.

2. Verfahren nach Anspruch 1, wobei die Navigationsdaten die Zielposition und einen Befehl umfassen, dass das Führungsfahrzeug während seiner autonomen Navigation an der Zielposition vorbeifahren soll.

3. Verfahren nach Anspruch 1 oder 2, wobei eine Fahrt von zumindest einem der beiden Fahrzeuge zumindest teilweise mittels eines fahrzeugexternen Überwachungssystems überwacht wird.

4. Verfahren nach Anspruch 3, wobei mittels des Überwachungssystems überwacht wird, ob das zweite Fahrzeug dem Führungsfahrzeug fehlerfrei folgt.

5. Verfahren nach Anspruch 3 oder 4, wobei mittels des Überwachungssystems überwacht wird, ob andere Objekte auf dem Parkplatz die Fahrt stören.

6. Verfahren nach einem der Ansprüche 3 bis 5, wobei mittels des Überwachungssystems überwacht wird, ob das Führungsfahrzeug zu der Zielposition fährt.

7. Verfahren nach einem der vorherigen Ansprüche, wobei dem zweiten Fahrzeug zum Abstellen in die Zielposition eine Soll-Abstelltrajektorie über das Kommunikationsnetzwerk übermittelt wird, so dass sich das zweite Fahrzeug basierend auf der Soll-Abstelltrajektorie in die Zielposition abstellen kann.

8. Verfahren nach einem der vorherigen Ansprüche, wobei die Zielposition eine Parkposition ist, an welcher das zweite Fahrzeug parken soll, oder eine Abholposition ist, an welcher ein Fahrer des Fahrzeugs das zweite Fahrzeug abholen soll.

9. Verfahren nach Anspruch 8, wobei als Zielpositionen die Parkposition und die Abholposition vorgesehen werden, so dass das zweite Fahrzeug dem Führungsfahrzeug zu der Parkposition folgt und dort einparkt, wobei zu einer späteren Zeit das geparkte Fahrzeug aus der Parkposition ausparkt und dem Führungsfahrzeug oder einem weiteren Führungsfahrzeug zu der Abholposition folgt und sich dort abstellt.

10. Verfahren nach einem der vorherigen Ansprüche, wobei mehrere zweite Fahrzeuge vorgesehen sind, die in Kolonne dem ersten Fahrzeug hinterherfahren, um zu ihren jeweiligen Zielpositionen geführt zu werden.

11. Verfahren nach Anspruch 10, wobei in der Kolonne eine Reihenfolge der zweiten Fahrzeuge und ihre entsprechenden Zielpositionen so aufeinander abgestimmt werden, dass stets das letzte zweite Fahrzeug in der Kolonne an der nächsten Zielposition halten und/oder parken soll.

12. Verfahren nach einem der vorherigen Ansprüche, wobei über das Kommunikationsnetzwerk an das erste und/oder an das zweite Fahrzeug ein Zuweisungssignal gesendet wird, dass das erste Fahrzeug das Führungsfahrzeug und/oder das zweite Fahrzeug das folgende Fahrzeug sind.

13. Verfahren nach einem der vorherigen Ansprüche, wobei das Zuweisen ein sensorisches Erfassen des Führungsfahrzeugs mittels des zweiten Fahrzeugs an einer vorbestimmten Position umfasst, damit das zweite Fahrzeug erkennt, dass das erfasste Fahrzeug das Führungsfahrzeug ist.

14. Verfahren nach Anspruch 13, wobei die vorbestimmte Position eine Abgabeposition ist, so dass das zweite an der Abgabeposition stehende Fahrzeug ein erfasstes Fahrzeug als Führungsfahrzeug erkennt, wenn es vor dem zweiten Fahrzeug steht.

15. Vorrichtung (201) zum Betreiben von mehreren Fahrzeugen, umfassend:
- einen Prozessor (203) zum Ermitteln von Navigationsdaten für eine autonome Navigation eines ersten Fahrzeugs auf einem Parkplatz,
- eine Kommunikationsschnittstelle (205) zum Senden der Navigationsdaten über ein Kommunikationsnetzwerk an das erste Fahrzeug für eine autonome Navigation des Führungsfahrzeugs auf dem Parkplatz, so dass das Führungsfahrzeug basierend auf den Navigationsdaten autonom auf dem Parkplatz navigieren kann, wobei
- der Prozessor (203) ferner ausgebildet ist, ein Zuweisungssignal zum Zuweisen des ersten Fahrzeugs an ein zweites Fahrzeug als ein Führungsfahrzeug für das zweite Fahrzeug zu ermitteln, dem dieses mittels seiner Fahrerassistenzsysteme autonom folgen soll,
- wobei die Kommunikationsschnittstelle (205) ferner ausgebildet ist, das Zuweisungssignal über das Kommunikationsnetzwerk an das zweite Fahrzeug zu senden, so dass dem zweiten Fahrzeug das erste Fahrzeug als Führungsfahrzeug, dem das erste Fahrzeug autonom folgen soll, zugewiesen werden kann,
- wobei der Prozessor (203) ferner ausgebildet ist, ein Zielsignal für das dem Führungsfahrzeug autonom folgende zweite Fahrzeug zu ermitteln, welches bewirkt dass das zweite Fahrzeug das Folgen abbricht und sich in eine Zielposition abstellt, wobei
- die Kommunikationsschnittstelle (205) ausgebildet ist, das Zielsignal über das Kommunikationsnetzwerk an das zweite Fahrzeug zu senden.

16. Parksystem (303) für Fahrzeuge, umfassend einen Parkplatz (305) und die Vorrichtung nach Anspruch 15.

17. Computerprogramm, umfassend Programmcode zur Durchführung des Verfahrens nach einem der Ansprüche 1 bis 14, wenn das Computerprogramm auf einem Computer ausgeführt wird.

## Claims

1. Method for operating a plurality of vehicles,
- wherein navigation data for autonomous navigation of the first vehicle in a carpark are transmitted (101) to a first vehicle via a communication network,
- wherein the first vehicle is assigned (103) as a lead vehicle to a second vehicle, which first vehicle the second vehicle is to follow autonomously by means of its driving assistance systems, wherein
- while the second vehicle follows the lead vehicle autonomously during the autonomous navigation of the lead vehicle in the carpark, a target signal is transmitted (105) to the second vehicle via the communication network, said signal causing the second vehicle to break off the following process and to stop at a target position.

2. Method according to Claim 1, wherein the navigation data comprise the target position and a command indicating that the lead vehicle is to drive past the target position during its autonomous navigation.

3. Method according to Claim 1 or 2, wherein a journey of at least one of the two vehicles is monitored at least partially by means of a vehicle-external monitoring system.

4. Method according to Claim 3, wherein the monitoring system monitors whether the second vehicle is following the lead vehicle without faults.

5. Method according to Claim 3 or 4, wherein the monitoring system monitors whether other objects in the carpark are disrupting the journey.

6. Method according to one of Claims 3 to 5, wherein the monitoring system monitors whether the lead vehicle is travelling to the target position.

7. Method according to one of the preceding claims, wherein, for stopping at the target position, a setpoint stopping trajectory is transmitted to the second vehicle via the communication network, so that the second vehicle can stop at the target position on the basis of the setpoint stopping trajectory.

8. Method according to one of the preceding claims, wherein the target position is a parking position in which the second vehicle is to park, or a pickup position at which a driver of the vehicle is to pick up the second vehicle.

9. Method according to Claim 8, wherein the parking position and the pickup position are provided as target positions, so that the second vehicle follows the lead vehicle to the parking position and parks there, wherein at a later time the parked vehicle moves out of the parking position and follows the lead vehicle or a further lead vehicle to the pickup position and stops there.

10. Method according to one of the preceding claims, wherein a plurality of second vehicles are provided which drive behind the first vehicle in a column so as to be guided to their respective target positions.

11. Method according to Claim 10, wherein in the column a sequence of second vehicles and their corresponding target positions are matched to one another in such a way that the last second vehicle in the column is always to stop and/or park at the next target position.

12. Method according to one of the preceding claims, wherein an assignment signal, indicating that the first vehicle is the lead vehicle and/or the second vehicle is the following vehicle, is transmitted to the first and/or the second vehicle via the communication network.

13. Method according to one of the preceding claims, wherein the assignment comprises sensory detection of the lead vehicle by means of the second vehicle at a predetermined position so that the second vehicle recognizes that the detected vehicle is the lead vehicle.

14. Method according to Claim 13, wherein the predetermined position is a handing in position so that the second vehicle which is located at the handing in position recognizes a detected vehicle as a lead vehicle when it is located in front of the second vehicle.

15. Device (201) for operating a plurality of vehicles, comprising:
- a processor (203) for acquiring navigation data for autonomous navigation of a first vehicle in a carpark,
- a communication interface (205) for transmitting the navigation data via a communication network to the first vehicle for autonomous navigation of the lead vehicle in the carpark, so that the lead vehicle can navigate autonomously in the carpark on the basis of the navigation data, wherein
- the processor (203) is also designed to acquire an assignment signal for assigning the first vehicle to a second vehicle as a lead vehicle for the second vehicle which this second vehicle is to follow autonomously by means of its driver assistance systems,
- wherein the communication interface (205) is also designed to transmit the assignment signal to the second vehicle via the communication network so that the first vehicle can be assigned to the second vehicle as a lead vehicle which the first vehicle is to follow autonomously,
- wherein the processor (203) is also designed to acquire a target signal for the second vehicle which follows the lead vehicle autonomously and causes the second vehicle to break off the following process and to stop at a target position, wherein
- the communication interface (205) is designed to transmit the target signal to the second vehicle via the communication network.

16. Parking system (303) for vehicles, comprising a carpark (305) and the device according to Claim 15.

17. Computer program comprising program code for carrying out the method according to one of Claims 1 to 14 when the computer program is run on a computer.

## Revendications

1. Procédé de fonctionnement d'une pluralité de véhicules,
- des données de navigation destinées à la navigation autonome du premier véhicule dans un parc de stationnement étant envoyées (101) à un premier véhicule par le biais d'un réseau de communication,
- le premier véhicule étant affecté (103) au deuxième véhicule comme véhicule de guidage que le deuxième véhicule doit suivre de manière autonome au moyen de ses systèmes d'aide à la conduite,
- tandis que le deuxième véhicule suit de manière autonome le véhicule de guidage pendant la navigation autonome du véhicule de guidage dans le parc de stationnement, un signal cible étant envoyé (105) au deuxième véhicule par le biais du réseau de communication, lequel signal a pour effet que le deuxième véhicule s'arrête de suivre et se gare dans une position cible.

2. Procédé selon la revendication 1, les données de navigation comprenant la position cible et une instruction selon laquelle le véhicule de guidage doit dépasser la position cible pendant sa navigation autonome.

3. Procédé selon la revendication 1 ou 2, la conduite d'au moins un des deux véhicules étant au moins partiellement surveillée au moyen d'un système de surveillance externe au véhicule.

4. Procédé selon la revendication 3, le système de surveillance surveillant si le deuxième véhicule suit sans erreur le véhicule de guidage.

5. Procédé selon la revendication 3 ou 4, le système de surveillance surveillant si d'autres objets dans le parc de stationnement interfèrent avec la conduite.

6. Procédé selon l'une des revendications 3 à 5, le système de surveillance surveillant si le véhicule de guidage est conduit en direction de la position cible.

7. Procédé selon l'une des revendications précédentes, une trajectoire de stationnement de consigne étant transmise par le biais du réseau de communication au deuxième véhicule destiné à se garer à la position cible de sorte que le deuxième véhicule puisse se garer à la position cible sur la base de la trajectoire de stationnement de consigne.

8. Procédé selon l'une des revendications précédentes, la position cible étant une position de stationnement où le deuxième véhicule doit se garer, ou est une position de prise en charge où un conducteur du véhicule doit prendre le deuxième véhicule.

9. Procédé selon la revendication 8, la position de stationnement et la position de prise en charge étant prévues comme positions cibles de sorte que le deuxième véhicule suit le véhicule de guidage jusqu'à la position de stationnement où il se gare, le véhicule quittant la position de stationnement à un instant ultérieur et suivant le véhicule de guidage ou un autre véhicule de guidage en direction de la position de prise en charge où il se gare.

10. Procédé selon l'une des revendications précédentes, une pluralité de deuxièmes véhicules étant prévus qui suivent le premier véhicule en colonne pour être guidés en direction de leurs positions cibles respectives.

11. Procédé selon la revendication 10, une succession de deuxièmes véhicules et leurs positions cibles correspondantes étant coordonnées les unes aux autres dans la colonne de manière à ce que le dernier deuxième véhicule de la colonne doive toujours s'arrêter et/ou se garer à la prochaine position cible.

12. Procédé selon l'une des revendications précédentes, un signal d'affectation étant envoyé par le biais du réseau de communication au premier et/ou au deuxième véhicule, signal selon lequel le premier véhicule est le véhicule de guidage et/ou le deuxième véhicule est le véhicule suivant.

13. Procédé selon l'une des revendications précédentes, l'affectation comprenant une détection sensorielle du véhicule de guidage au moyen du deuxième véhicule à une position prédéterminée pour que le deuxième véhicule reconnaisse que le véhicule détecté est le véhicule de guidage.

14. Procédé selon la revendication 13, la position prédéterminée étant une position de livraison de sorte que le deuxième véhicule situé à la position de livraison reconnaisse un véhicule détecté comme véhicule de guidage lorsqu'il est devant le deuxième véhicule.

15. Dispositif (201) de fonctionnement d'une pluralité de véhicules, le dispositif comprenant :
- un processeur (203) destiné à déterminer des données de navigation destinées à la navigation autonome d'un premier véhicule dans un parc de stationnement,
- une interface de communication (205) destinée à envoyer les données de navigation par le biais d'un réseau de communication au premier véhicule pour une navigation autonome du véhicule de guidage dans le parc de stationnement de sorte que le véhicule de guidage puisse naviguer de manière autonome dans le parc de stationnement sur la base des données de navigation,
- le processeur (203) étant en outre conçu pour déterminer un signal d'affectation destiné à affecter le premier véhicule à un deuxième véhicule comme véhicule de guidage du deuxième véhicule que ce dernier doit suivre de manière autonome au moyen de ses systèmes d'aide à la conduite,
- l'interface de communication (205) étant en outre conçue pour envoyer le signal d'affectation au deuxième véhicule par le biais du réseau de communication de sorte que le premier véhicule puisse être affecté au deuxième véhicule comme véhicule de guidage que le premier véhicule doit suivre de manière autonome,
- le processeur (203) étant en outre conçu pour déterminer un signal cible pour le deuxième véhicule suivant de manière autonome le véhicule de guidage, lequel signal a pour effet que le deuxième véhicule s'arrête de suivre et se gare à une position cible,
- l'interface de communication (205) étant conçue pour envoyer le signal cible au deuxième véhicule par le biais du réseau de communication.

16. Système de stationnement (303) destiné à des véhicules, ledit système comprenant un parc de stationnement (305) et le dispositif selon la revendication 15.

17. Logiciel, comprenant un code de programme destiné à mettre en œuvre le procédé selon l'une des revendications 1 à 14, lorsque le logiciel est exécuté sur un ordinateur.
